# EUROPÄISCHE PATENTSCHRIFT

(11) **EP 2 129 506 B1**
(45) Veröffentlichungstag und Bekanntmachung des Hinweises auf die Patenterteilung: **14.09.2011**
(21) Anmeldenummer: 08718241.6
(22) Anmeldetag: 26.03.2008
(51) Int. Cl.: B29C 45/34, B29C 45/14, B60J 10/02, B60J 10/04

(54) **VERFAHREN ZUR HERSTELLUNG EINER DICHTUNGSANORDNUNG, INSBESONDERE FÜR EIN KRAFTFAHRZEUG, MIT EINEM DICHTUNGSELEMENT UND EINEM TRÄGER SOWIE EINE SOLCHE DICHTUNGSANORDNUNG**
METHOD FOR THE PRODUCTION OF A SEALING ASSEMBLY, IN PARTICULAR FOR A MOTOR VEHICLE, HAVING A SEALING ELEMENT AND A SUPPORT, AND SUCH A SEALING ASSEMBLY
PROCÉDÉ DE PRODUCTION D'UN SYSTÈME D'ÉTANCHÉITÉ, NOTAMMENT POUR AUTOMOBILE, COMPRENANT UN ÉLÉMENT D'ÉTANCHÉITÉ ET UN SUPPORT, ET SYSTÈME D'ÉTANCHÉITÉ CORRESPONDANT

(30) Priorität: 30.03.2007 DE 102007015466
(43) Veröffentlichungstag der Anmeldung: 09.12.2009
(73) Patentinhaber: METZELER Automotive Profile Systems GmbH, 88131 Lindau (DE)
(72) Erfinder: STERK, Thomas, 88069 Tettnang (DE); HOHL, Georg, 88045 Friedrichshafen (DE)
(74) Vertreter: Schober, Christoph D.
(86) Internationale Anmeldenummer: PCT/EP2008/053578
(87) Internationale Veröffentlichungsnummer: WO 2008/119706

(56) Entgegenhaltungen:
- WO-A-97/47456
- WO-A-2006/035180
- WO-A-2006/067622
- DE-A1-102004 028 738
- US-A1- 2006 156 632

## Beschreibung

Die vorliegende Erfindung betrifft ein Verfahren zur Herstellung einer Dichtungsanordnung, insbesondere für ein Kraftfahrzeug, wobei die Dichtungsanordnung ein Dichtungselement und einen Träger umfasst. Ferner betrifft die Erfindung eine solche Dichtungsanordnung.

Kraftfahrzeuge weisen häufig Türen auf die sowohl mit einer heb- und senkbaren als auch mit einer feststehenden Fensterscheibe ausgestattet sind. Um sowohl die feststehende Fensterscheibe als auch die bewegliche Fensterscheibe abdichten zu können, ist häufig ein Steg zwischen diesen Fensterscheiben vorgesehen, an dem eine Dichtungsanordnung zur Abdichtung und Führung der beweglichen Fensterscheibe und zur Abdichtung und Halterung der feststehenden Fensterscheibe angebracht ist. Herkömmlicherweise gestaltet sich ein Herstellungsverfahren für eine derartige Dichtungsanordnung sehr aufwendig. Insbesondere war es bisher erforderlich eine derartige Dichtungsanordnung in mehreren aufeinander folgenden Einzelverfahren herzustellen. So wurden bisher mehrere Dichtungselemente separat hergestellt und bei der Endmontage an der Tür angebracht. Üblicherweise wird eines der Dichtungselemente mittels Spritzgießen hergestellt, wobei ein Metallträger angespritzt wird. Hierbei bilden sich häufig Luftblasen an der Kontaktfläche von Träger und Spritzgießmasse. Ferner war es häufig erforderlich, ein separates Dichtungselement für die bewegliche Fensterscheibe zu erwärmen und zu biegen. Hier ergaben sich häufig Ausbeulungen.

Ein Verfahren und eine Vorrichtung zur Herstellung eines Profilschlauchs werden in WO 2006/035180 A1 offenbart. Der Profilschlauch ist aus einem thermoplastischen Material, wie beispielsweise PVC, einem Polyurethan oder einem synthetischen Gummi hergestellt. Der Profilschlauch umrandet und fasst eine Verglasung ein. Zur Herstellung einer stoffschlüssigen Verbindung zwischen dem Profilschlauch und der Verglasung wird die Verglasung in eine Spritzgießform, die zwei Formhälften umfasst, eingesetzt. Zusätzlich wird ein Dichtungssystem in die Formhälfte eingesetzt, das mehrere Lippen umfasst, die dazu dienen, Entlüftungsöffnungen zwischen der Verglasung und der Spritzgießform zu erzeugen. Nach dem Schließen der Spritzgießform wird der Profilschlauch durch Einspritzen eines der zuvor genannten Materialien erzeugt. Hierbei kann die in dem Hohlraum des Spritzgießwerkzeugs vorhandene Luft über die mittels der Lippen gebildete Entlüftungsöffnung entweichen.

WO 97/47456 A1 offenbart ein Fenstermodul und ein Verfahren zur Herstellung des Fenstermoduls. Das Verfahren sieht vor, einen Träger und eine Dichtung in eine Spritzgießform einzusetzen und mit einem Polymer, wie beispielsweise EPDM, auszuspritzen. Hierdurch wird ein Dichtstreifen gebildet, der den Träger umgibt und eine stoffschlüssige Verbindung zwischen einer Fensterscheibe und der Dichtung erzeugt.

Eine Dichtung und ein Verfahren zum Herstellen einer Dichtung offenbart WO 2006/067622 A1. Die Dichtung umfasst einen Trennsteg, der den Fensterrahmen der Tür eines Kraftfahrzeugs in zwei Bereiche aufteilt, und zwar derart, dass eine feststehende Fensterscheibe und eine bewegliche Fensterscheibe aufgenommen werden. Zur Herstellung des Trennstegs wird ein Dichtungselement formschlüssig an einem Träger befestigt und anschließend in eine Gussform zusammen mit der feststehenden Fensterscheibe eingebracht. Danach wird ein weiteres Dichtungselement angespritzt.

WO 2008/119706 A1 offenbart eine Dichtungsanordnung für ein Kraftfahrzeug und ein Verfahren zu dessen Herstellung. Die Dichtungsanordnung weist zwei Dichtungselemente auf, die aus unterschiedlichen Materialien hergestellt sind. Das eine feststehende Fensterscheibe abdichtende erste Dichtungselement besteht aus einem ersten Material und wird durch Spritzgießen an einem Träger angebracht. Das zweite Dichtungselement wird nach dem Spritzgießen des ersten Dichtungselements an dem Träger angeordnet.

Der Erfindung liegt die **Aufgabe** zugrunde, ein Verfahren zur Herstellung einer Dichtungsanordnung, insbesondere für ein Kraftfahrzeug, anzugeben, so dass sich die Dichtungsanordnung auf einfache Weise unter Gewährleistung einer zuverlässigen und langlebigen Verbindung von Dichtungselement und Träger herstellen lässt.

Diese Aufgabe wird durch ein Verfahren gemäß Anspruch 1 und eine Dichtungsanordnung gemäß Anspruch 6 **gelöst.** Bevorzugte Ausgestaltungen der Erfindung werden in den Ansprüchen 2 bis 5 und 7 bis 15 definiert.

Mit dem erfindungsgemäßen Verfahren kann eine geeignete Entlüftung der während des Spritzgießprozesses in dem Hohlraum verdrängten Luft erfolgen. Auf diese Weise wird die Bildung von Luftblasen im Bereich der Trägeroberfläche vermieden. Somit kann eine zuverlässige und langlebige stoffschlüssige Verbindung zwischen dem durch die Spritzgießmasse gebildeten Dichtungselement und dem Träger erzielt werden. Es wird die Luft aus dem Bereich verdrängt, der durch die Spritzgießmasse zur Bildung des Dichtungselementes ausgefüllt wird. Der ursprüngliche Werkzeughohlraum ist durch das Volumen des in das Spritzgießwerkzeug eingebrachten Trägers reduziert. Als Spritzgießmasse wird vorzugsweise ein elastomerer Werkstoff verwendet.

Die Luft wird in einen Zwischenraum abgeführt, der sich insbesondere innerhalb des Spritzgießwerkzeugs, aber nicht im Bereich des Hohlraumes befindet. Dieser Zwischenraum wird durch ein zusammen mit dem Träger in das Spritzgießwerkzeug eingebrachtes weiteres Dichtungselement gebildet. Dies wird weiter unten noch näher erläutert. Für diesen Fall ist demnach die Ausbildung eines Entlüftungskanals in den Werkzeughälften des Spritzgießwerkzeugs nicht erforderlich, da die Luft innerhalb des Werkzeugs in einen Bereich verdrängt wird, der insbesondere die Verbindung von Spritzgießmasse und Träger nicht beeinflusst. Alternativ oder zusätzlich kann jedoch ein solcher Entlüftungskanal vorgesehen werden.

Bei einer zusätzlichen oder alternativen Weiterbildung des Verfahrens entweicht die Luft wenigstens teilweise aus dem Spritzgießwerkzeug. Dies kann auch bei einer Ausbildung des vorbeschriebenen Zwischenraums erfolgen.

Die Luft wird über eine luftdurchlässige Schicht als Luftablass abgeführt. Eine derartige Schicht lässt sich mit einfachen Mitteln ausbilden und auf einfache Weise an der gewünschten Stelle positionieren. Diese luftdurchlässige Schicht ist zwischen dem Dichtungselement und dem Träger vorgesehen.

Weiter bevorzugt wird ein die Form des Dichtungselementes bestimmender Formkern in dem Hohlraum positioniert. Dieser Formkern wird vorzugsweise wenigstens abschnittsweise an dem Träger angelegt, um eine geeignete Fixierung des Trägers in dem Werkzeughohlraum zu erreichen. In bevorzugter Ausgestaltung erstreckt sich der Träger und der Hohlraum beziehungsweise das Dichtungselement entlang einer Längsrichtung. Hierbei kann der sich vorteilhafterweise ebenfalls entlang dieser Längsrichtung erstreckende Formkern abschnittsweise beziehungsweise punktuell an dem Träger angelegt werden kann. Auf diese Weise wird der Träger über den Formkern zusätzlich in dem Spritzgießwerkzeug gehalten. Ferner ermöglicht ein im Querschnitt betrachtet variabel entlang der Längsrichtung gestalteter Formkern zwischen den anliegenden Abschnitten eine geeignete Ausbildung des Kanals zur späteren Aufnahme der Fensterscheibe. Vorzugsweise sind diese Anlageabschnitte des Formkerns in Längsrichtung äquidistant beabstandet.

Als ein solcher Formkern kann aber auch ein vorzugsweise extrudiertes weiteres Dichtungselement in dem Hohlraum positioniert werden. Dieses weitere Dichtungselement wird an dem Träger befestigt. Das weitere Dichtungselement wird vor Einbringen des Trägers in das Spritzgießwerkzeug formschlüssig an dem Träger fixiert. Auf diese Weise kann beispielsweise das Dichtungselement für die bewegliche Fensterscheibe bereits vormontiert werden und gegebenenfalls infolge des Spritzgießvorgangs zusätzlichen fixiert werden, beispielsweise durch teilweises Anspritzen oder Umspritzen. Zudem kann dieses Dichtungsprofil mit der luftdurchlässigen Schicht versehen werden und/oder auch zur Bildung des Zwischenraums für die verdrängte Luft verwendet werden.

Bei einer weiteren bevorzugten Weiterbildung des Verfahrens wird eine Halteeinheit zur Halterung des Trägers und/oder des Dichtungselementes in dem Hohlraum positioniert. So kann beispielsweise bei einem U-förmigen Dichtungselement mit Aufnahmekanal für die Fensterscheibe die Halteeinheit im Bereich des Aufnahmekanals positioniert werden. Es kann eine sich entlang der Längsrichtung des Spritzgießwerkzeugs über die gesamte Länge erstreckende Halteeinheit oder eine Halteeinheit in Form eines Schiebers, der entlang der Längsrichtung des Spritzgießwerkzeugs während dem Einspritzen der Spritzgießmasse mitgeführt wird, eingesetzt werden.

Die erfindungsgemäße Dichtungsanordnung ist mit dem erfindungsgemäßen Verfahren hergestellt und macht sich insofern die oben erwähnten Vorteile zunutze.

Bevorzugt liegt die luftdurchlässige Schicht an dem Träger an. Weiter bevorzugt erstreckt sich die luftdurchlässige Schicht entlang der Längsrichtung des Trägers, das heißt entlang jener Richtung, in welcher der Spritzgießvorgang durchgeführt wird. Vorteilhafterweise stellt eine Außenfläche des Dichtungsprofils den Luftablass beziehungsweise die luftdurchlässige Schicht bereit und wird derart positioniert, dass die verdrängte Luft über den Luftablass beziehungsweise die luftdurchlässige Schicht abgeführt werden kann.

Vorteilhafterweise mündet die luftdurchlässige Schicht an einer Außenoberfläche des ersten Dichtungselements. Auf diese Weise kann die Entlüftung in einem Bereich zwischen Träger und Dichtungselement erfolgen. In vorteilhafter Ausgestaltung ist die luftdurchlässige Schicht durch eine bestimmte Kontur der Außenoberfläche gebildet, vorzugsweise durch eine Riffelung. Altenativ oder zusätzlich kann die Kontur wenigstens einen Entlüftungskanal bilden.

Vorteilhafterweise umfasst die luftdurchlässige Schicht eine Beflockung, Papier, Karton oder Vlies. Eine aus derartigen Materialien gebildete Schicht lässt sich kostengünstig und auf einfache Weise herstellen.

Das zweite Dichtungselement ist an dem Träger befestigt. Das erste Dichtungselement ist formschlüssig an dem Träger festgelegt und das zweite Dichtungselement durch Spritzgießen stoffschlüssig mit dem Träger verbunden.

Bei einer weiteren bevorzugten Ausgestaltung umfasst der Träger eine Außenseite und eine Innenseite, wobei das erste Dichtungselement an der Außenseite und das zweite Dichtungselement an der Innenseite angebracht ist. Von Vorteil ist ferner, wenn der Träger eine Ausnehmung zum formschlüssigen Hintergreifen eines Vorsprunges des zweiten Dichtungselementes umfasst. Vorzugsweise erstreckt sich der Träger entlang einer Längsrichtung und das erste Dichtungselement weist einen sich in Längsrichtung veränderlichen Querschnitt auf. Bevorzugt ist der Träger im Querschnitt H-, L- oder U-förmig ausgebildet.

Nachfolgend wird die Erfindung unter Bezugnahme auf die Zeichnungen weiter erläutert. Dabei zeigen schematisch:
- Fig. 1: eine Seitenansicht einer Zusammenstellung mehrerer Dich- tungsprofile mit einer erfindungsgemäßen Dichtungsanordnung und einer beweglichen sowie einer feststehenden Fenster- scheibe einer Kraftfahrzeugtür;
- Fig. 2: einen Querschnitt gemäß der Linie II-II in Fig. 1 durch eine erste Ausführungsform der Dichtungsanordnung mit zusätzlicher Darstellung eines Spritzgießwerkzeuges;
- Fig. 3: ein erstes Dichtungselement der Dichtungsanordnung gemäß Fig. 1 im Querschnitt;
- Fig. 4: ein Träger der Dichtungsanordnung gemäß Fig. 1 im Quer- schnitt, und
- Fig. 5 bis 8: mehrere Querschnitte analog zu Fig. 2 mit alternativen Ausfüh- rungsformen der Dichtungsanordnung.

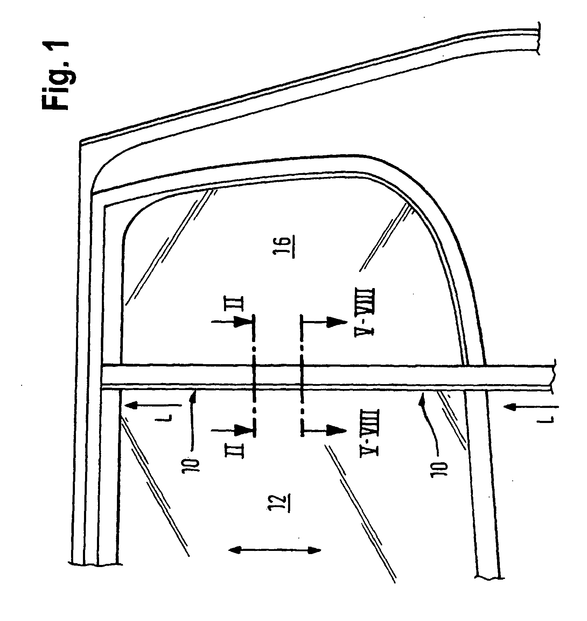

Fig. 1 zeigt eine Ansicht mehrerer Dichtungsprofile einer Kraftfahrzeugtür. Eines dieser Dichtungsprofile bildet die nachfolgend ausführlich erläuterte Dichtungsanordnung 10 zur Abdichtung und Führung einer ersten Fensterscheibe 12 sowie zur Abdichtung und Halterung einer zweiten Fensterscheibe 16. Die erste Fensterscheibe 12 ist, wie durch den Pfeil in Fig. 1 angedeutet, heb- und senkbar, wohingegen die zweite Fensterscheibe 16 feststehend ausgeführt ist. Mit anderen Worten bildet die Dichtungsanordnung 10 eine Art Halte-/Dichtungssteg zwischen den beiden Fensterscheiben 12, 16.

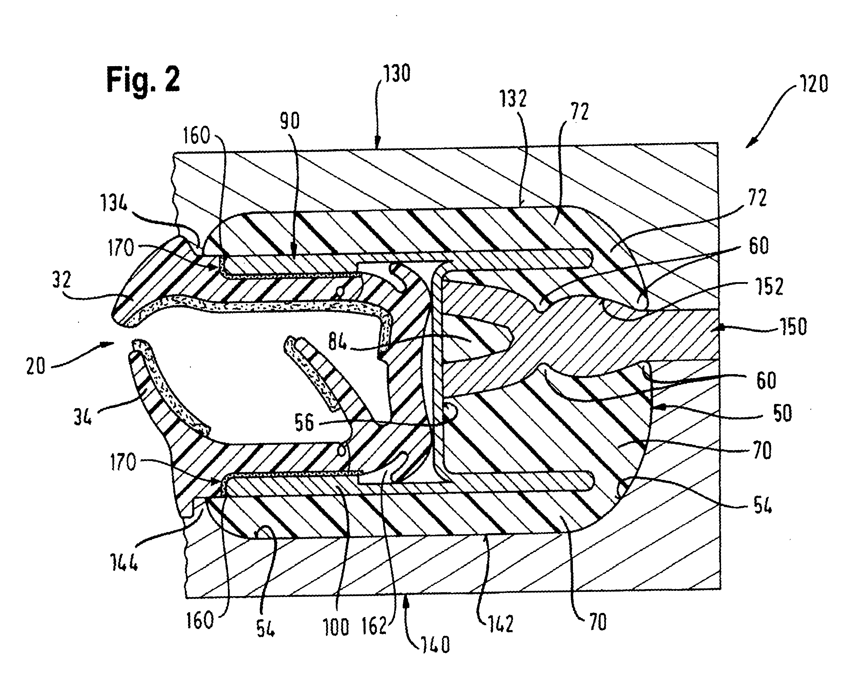

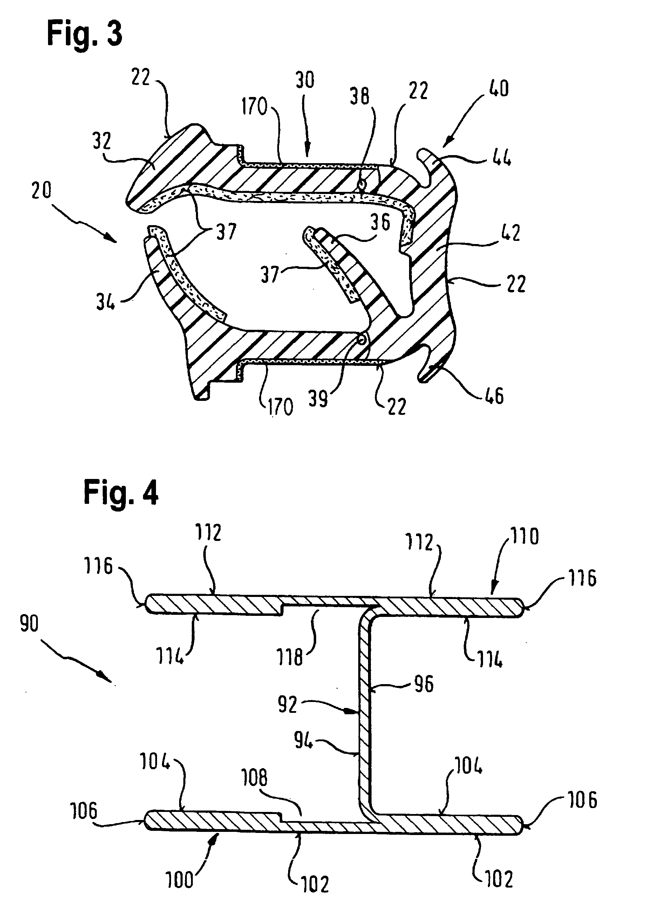

Wie aus den Querschnitten gemäß den Fig. 2 und 5 bis 8 zur erkennen, weist die Dichtungsanordnung 10 jeweils ein erstes extrudiertes Dichtungselement 20, ein zweites spritzgegossenes Dichtungselement 50 und einen Träger 90 auf. Das erste extrudierte Dichtungselement ist separat in Fig. 3 gezeigt. Fig. 4 zeigt den Träger 90 alleine.

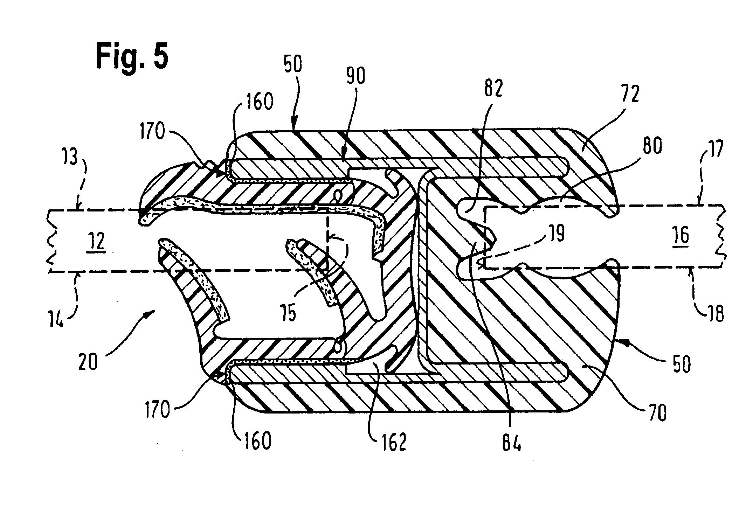

Aus einer Zusammenschau von Fig. 1 und einer der Fig. 5 bis 8 wird die gegenseitige Anordnung der Dichtungsanordnung 10 und der beiden Fensterscheiben 12, 16 ersichtlich. So dient bei allen gezeigten Ausführungsformen das erste Dichtungselement 20 zur Führung, Halterung und Abdichtung der ersten Fensterscheibe 12. Das zweite Dichtungselement 50 dient zur Halterung und Abdichtung der zweiten Fensterscheibe 16. Wie ferner aus den Querschnitten gemäß der Fig. 2, 5 bis 8 mit den angedeuteten Lagen der Fensterscheiben 12, 16 zu entnehmen ist, weist die erste Fensterscheibe 12 eine Innenfläche 13, eine Außenfläche 14 und eine Stirnfläche 15 auf. Dementsprechend weist die zweite Fensterscheibe 16 eine Innenfläche 17, eine Außenfläche 18 und eine Stirnfläche 19 auf.

Sämtliche in den Fig. 2 und 5 bis 8 dargestellte erste Dichtungselemente 20 weisen einen Dichtungsabschnitt 30 und einen Befestigungsabschnitt 40 auf. Der Dichtungsabschnitt 30 umfasst jeweils drei Dichtlippen 32, 34, 36, die jeweils mit einer Beflockung 37 versehen sind. Wie den Fig. 5 bis 8 zu entnehmen ist, kommt die Dichtlippe 32 in der späteren Einbaulage dichtend an der Innenfläche 13, die Dichtlippe 34 dichtend an der Außenfläche 14 und die Dichtlippe 36 dichtend an der Stirnfläche 15 zu liegen. Die Beflockungsschicht 37 ermöglicht eine reibungsreduzierte Führung der Fensterscheibe 12 senkrecht zur Zeichenebene der Fig. 5 bis 8.

Der Befestigungsabschnitt 40 weist im Anschlussbereich des Dichtungsabschnittes 30 eine Basis 42 auf. Von der Basis 42 ragen Vorsprünge in Form von zwei Rastschenkel 44, 46 ab, die ein formflüssiges Festlegen des ersten Dichtungselements 20 an dem Träger 90 ermöglichen. Um für das formschlüssige Befestigen des ersten Dichtungselementes 20 an dem Träger 90 eine gewisse Flexibilität bereitstellen zu können, weist der Dichtungsabschnitt 30 zwei Nuten 38, 39 auf (siehe Fig. 3). So können die beiden schenkelartigen Abschnitte des Dichtungsabschnittes 30 in einem gewissen Maß aufeinander zu bewegt werden, um so ein leichteres formschlüssiges Befestigen zu ermöglichen. In dem in den Fig. 2 und 5 bis 8 gezeigten formschlüssig befestigten Zustand des ersten Dichtungselements 20 an dem Träger 90 greifen die Rastschenkel 44, 46 in Ausnehmungen 108, 118 des Trägers 90 ein und eine Außenoberfläche 22 des ersten Dichtungselementes liegt im Bereich des Dichtungsabschnittes 30 an der Aussenseite des Trägers 90 an.

Der Träger 90 ist gemäß den Fig. 2 und 4 bis 8 (siehe insbesondere Fig. 4) H-förmig ausgebildet und umfasst einen mittleren Steg 92 mit einer ersten Seitenfläche 94 und einer zweiten Seitenfläche 96. Ferner umfasst der Träger 90 zwei im Wesentlichen rechtwinklig an den Steg 92 angeschlossene Flansche 100, 110. Der aus den beiden Flanschen 100, 110 und dem Steg 92 gebildete Träger 90 ist einstückig ausgebildet. Der Flansch 100 weist eine Außenseite 102, eine Innenseite 104 und eine Stirnfläche 106 auf. Die Ausnehmung 108 ist im Bereich der Innenseite 104 vorgesehen. Der Flansch 110 weist dementsprechend eine Außenseite 112, eine Innenseite 114 und eine Stirnfläche 116 auf. Die Ausnehmung 118 ist an der Innenseite 114 vorgesehen.

Das gemäß des weiter unten noch zu erläuternden Verfahrens hergestellte zweite Dichtungselement 50 weist eine an den Flanschen 100, 110 stoffschlüssig befestigte Innenfläche 56 sowie eine Außenfläche 54 auf. Die Außenfläche 54 und die Innenfläche 56 bilden eine Umrissfläche 52 des zweiten Dichtungselements 50.

Ferner umfasst das zweite Dichtungselement 50 einen ersten Befestigungsabschnitt 70, der an dem Flansch 100 stoffschlüssig befestigt ist und einen zweiten Befestigungsabschnitt 72, der an dem Flansch 110 stoffschlüssig befestigt ist. Das zweite Dichtungselement 50 weist ferner einen Kanal 80 zur Aufnahme der zweiten Fensterscheibe 16 auf. Die den Kanal 80 umgebenden Bereiche des zweiten Dichtungselements 50 dienen somit zugleich als Dichtungsabschnitt 60. Dieser Dichtungsabschnitt 60 ist derart ausgestaltet, dass die zweite Fensterscheibe 16 in den Kanal 80 eingeführt werden kann und dort über den Dichtungsabschnitt 60 ausreichend abgedichtet und dauerhaft festgelegt ist. Über die beiden Befestigungsabschnitte 70, 72 ist die Fensterscheibe 16 an dem Träger 90 gehalten.

Wie aus einer Zusammenschau der Fig. 2 und 5 bis 8 unter Berücksichtigung der jeweiligen Lage der Querschnitte (siehe Fig. 1) ersichtlich, weist der Kanal 80 entlang der Längsrichtung L der Dichtungsanordnung 10 eine im Querschnitt veränderlich geformte Erhebung 84 auf. Diese Erhebung 84 gestaltet einen Grund 82 des Kanals 80. Entlang der Längsrichtung L liegt die Erhebung 84 vollflächig an der Seitenfläche 96 des Trägers 90 an. In Richtung senkrecht zu dem Steg 92 ausgehend von der Seitenfläche 96 variiert die Höhe der Erhebung 84 entlang der Längsrichtung L. Diese Formgebung der Erhebung 84 ergibt sich aus dem im Folgenden näher erläuterten Herstellungsverfahren.

Zur Herstellung der Dichtungsanordnung 10 wird ein Spritzgießwerkzeug 120 mit zwei Werkzeugteilen 130, 140 verwendet (siehe Fig. 2). Der Einfachheit halber wurde in den Fig. 5 bis 8 auf die Darstellung des Spritzgießwerkzeuges 120 und insbesondere der Werkzeugteile 130, 140 verzichtet. Bei diesen Ausführungsformen ist das Spritzgießwerkzeug 120 beziehungsweise die Werkzeugteile 130, 140 im Wesentlichen entsprechend wie in Fig. 2 ausgebildet und angeordnet. Bei allen Ausführungsformen des Spritzgießwerkzeuges 120 weisen die Werkzeugteile 130, 140 jeweils eine Innenfläche 132, 142 und einen Vorsprung 134, 144 auf. Die Innenflächen 132, 142 stellen einen Werkzeughohlraum bereit. Wie ein Vergleich der Fig. 5 bis 8 zeigt, können Werkzeugteile 130, 140 mit unterschiedlich geformten Innenflächen 132, 142 verwendet werden, um wahlweise eine stoffschlüssige Anbindung des zweiten Dichtungselementes 50 an das erste Dichtungselement 20 zu erreichen. Die Vorsprünge 134, 144 können auch mit Rillen versehen sein (siehe Fig. 5), um einen Austrieb der verdrängten Luft an dieser Stelle zu vermeiden. Ferner umfasst das Spritzgießwerkzeug 120 einen Formkern 150 mit einer Außenfläche 152 zur Ausbildung des Kanals 80 und der Erhebung 84.

In einem ersten Schritt wird das erste Dichtungselement 20 formschlüssig an dem Träger 90 befestigt. Hierzu werden die beiden Schenkel des Dichtungsabschnittes 30 über die Nuten 38, 39 leicht zusammen gedrückt und das erste Dichtungselement 20 in den durch die Flansche 100, 110 und den Steg 92 gebildeten Freiraum eingedrückt. In der Endlage gemäß Fig. 2 berührt die Außenseite der Basis 42 die erste Seitenfläche des Stegs 92 zumindest abschnittsweise und die beiden Rastschenkel 44, 46 rasten in den Ausnehmungen 108, 118 ein. In dieser Lage ist das erste Dichtungselement 20 formschlüssig an dem Träger 90 festgelegt.

Diese Zusammenstellung wird nun innerhalb des Spritzgießwerkzeuges 120 in dem Werkzeughohlraum in einer vorbestimmten Lage positioniert, so dass der verbleibende Hohlraum die vorbestimmte Form des herzustellenden zweiten Dichtungselements 50 hat. Mit anderen Worten wird der durch die Innenflächen 132, 142 begrenzte ursprüngliche Werkzeughohlraum um das Volumen von Träger 90 und erstem Dichtungselement 20 reduziert. Um eine gesicherte Lage der Zusammenstellung 50, 90 zu erreichen, trägt einerseits das erste Dichtungselement 20 bei, welches mit den Dichtlippen 32, 34 zumindest abschnittsweise dichtend an den Innenflächen 132, 142 der Werkzeugteile 130, 140 anliegt. Für diese abdichtende Anlage sorgen auch die beiden Vorsprünge 134, 144 der Werkzeugteile 130, 140. Um eine weitere Fixierung des ersten Dichtungselements 20 an dem Träger 90 und/oder den Werkzeugteilen 130, 140 zu gewährleisten, kann alternativ zusätzlich eine Halteeinheit oder ein Schieber in dem Werkzeughohlraum positioniert werden und zwar in der in den Fig. 5 bis 8 angedeuteten Lage der späteren Fensterscheibe 12. Zu diesem Zweck weist die Halteeinheit geeignete Abmessungen auf, insbesondere hinsichtlich der Breite, so dass das erste Dichtungselement 20 und insbesondere der Dichtungsabschnitt 30 mit den Dichtlippen 32, 34 ausreichend stark an die Außenflächen 102, 112 und die Stirnflächen 106, 116 der Flansche 100, 110 gedrückt werden, so dass die Spritzgießmasse nur den vorbestimmten Hohlraum ausfüllt.

In dem Bereich zwischen den Innenseiten 104, 114 und der Seitenfläche 96 wird ein die Form eines zweiten Dichtungselements 50 mitbestimmender Formkern 150 derart in dem Spritzgießwerkzeug 120 positioniert, dass der Kanal 80 geformt werden kann. Wie eine Zusammenschau der Fig. 2 und 5 bis 8 zeigt, weist der Formkern 150 entlang der Längsrichtung L, die der Fortschrittsrichtung des Spritzgießprozesses entspricht, einen veränderlichen Querschnitt auf, so dass die Erhebung 84 ausgebildet werden kann. Mit anderen Worten liegt der Formkern 150 entlang der Längsrichtung L betrachtet nur abschnittsweise oder punktuell an der Seitenfläche 96 an.

Auf diese Weise wird auf der in Fig. 2 rechten Seite durch die Positionierung des Formkerns 150 ein ausreichender Halt für den Träger 90 und das erste Dichtungselement 20 im Inneren des Spritzgießwerkzeuges 120 und auf der in Fig. 2 linken Seite ein ausreichender Halt für den Träger 90 und das erste Dichtungselement 20 durch das erste Dichtungselement 20 erreicht.

Nachfolgend wird die aus einem elastomeren Werkstoff bestehende Spritzgießmasse in den Hohlraum eingebracht und das zweite Dichtungselement 50 geformt. Die Spritzgießmasse und damit das zweite Dichtungselement geht eine stoffschlüssige Verbindung mit dem Träger 90 ein. Wie in den Fig. 5 bis 8 zu erkennen, kann bereichsweise auch eine stoffschlüssige Verbindung zwischen dem zweiten Dichtungselement 50 und dem ersten Dichtungselement 20 erfolgen, beispielsweise im Bereich der Dichtlippen 32, 34. Alternativ kann aber auf eine stoffschlüssige Verbindung von erstem Dichtungselement 20 und zweitem Dichtungselement 50 verzichtet werden.

Durch das Einbringen der Spritzgießmasse wird die in dem Hohlraum für das zweite Dichtungselement 50 vorhandene Luft mit fortschreitendem Einspritzen der Spritzgießmasse verdrängt. Um diese Luft zur Vermeidung der Bildung von Luftblasen an der Aussenseite 102, 112 des Trägers 90 aus dem Bereich des Hohlraumes abführen zu können, ist ein Luftablass 160 vorgesehen.

Der Luftablass wird durch eine luftdurchlässige Schicht 170 gebildet. Die luftdurchlässige Schicht 170 ist zwischen dem ersten Dichtungselement 20 und dem Träger 90 vorgesehen. Die Außenseite der luftdurchlässigen Schicht 170 bildet zugleich eine Außenoberfläche 22 des ersten Dichtungselements 20 und liegt an den Innenseiten 103, 114 der Flansche 100, 110 an. Die luftdurchlässige Schicht 170 ist auf einfache Weise ausgebildet und umfasst vorzugsweise eine Beflockung, eine Papier- oder Kartonschicht oder ein Vlies. Als Vlies kommt insbesondere ein Stoffgewebe in Betracht. Die Beflockung kann gleichermaßen wie die Beflockung 37 der Dichtlippen 32 bis 36 ausgeführt sein. Je nach Materialwahl für die luftdurchlässige Schicht 170 kann diese Schicht vorab bei der Herstellung des ersten Dichtungselements 20 ausgebildet werden, beispielsweise durch eine Beflockung. Alternativ oder zusätzlich kann bei der Befestigung des ersten Dichtungselements 20 an dem Träger 90 eine Schicht aus Papier, Karton oder Vlies zwischen dem Dichtungsabschnitt 30 und dem Flansch 100 beziehungsweise 110 eingelegt werden. Eine derartig eingelegte Schicht lässt sich nach dem Spritzgießprozess leicht entfernen, kann aber auch dort verbleiben.

Über den so geschaffenen Luftablass 160 kann die verdrängte Luft entlang der Längsrichtung L in einen Zwischenraum 162 geleitet werden. Dieser Zwischenraum 162 befindet sich ebenfalls innerhalb des Spritzgießwerkzeuges 120 und wird beispielsweise durch den späteren Aufnahmekanal des ersten Dichtungselements 20 bereitgestellt. Alternativ oder zusätzlich kann die verdrängte Luft über einen Entlüftungskanal aus dem Spritzgießwerkzeug 120 entweichen.

Alternativ oder zusätzlich kann die luftdurchlässige Schicht 170 auch durch eine vorbestimmte Kontur der Außenoberfläche des ersten Dichtungselements 20, beispielsweise durch eine Riffelung, gebildet werden. Eine solche Kontur stellt wenigstens einen Entlüftungskanal bereit.

Nach vollständigem Einbringen der Spritzgießmasse und Ausbildung des zweiten Dichtungselements 50 entlang der gewünschten Länge wird die Spritzgießmasse vulkanisiert, und die fertige Dichtungsanordnung 10 kann aus dem Spritzgießwerkzeug 120 entnommen werden.

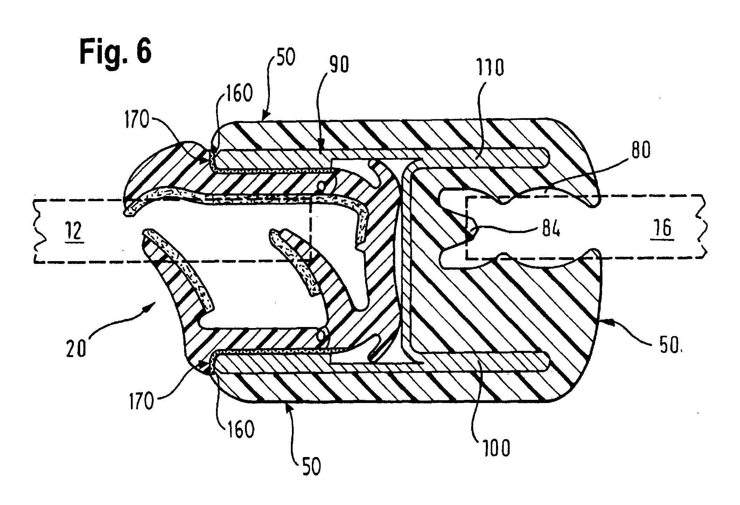

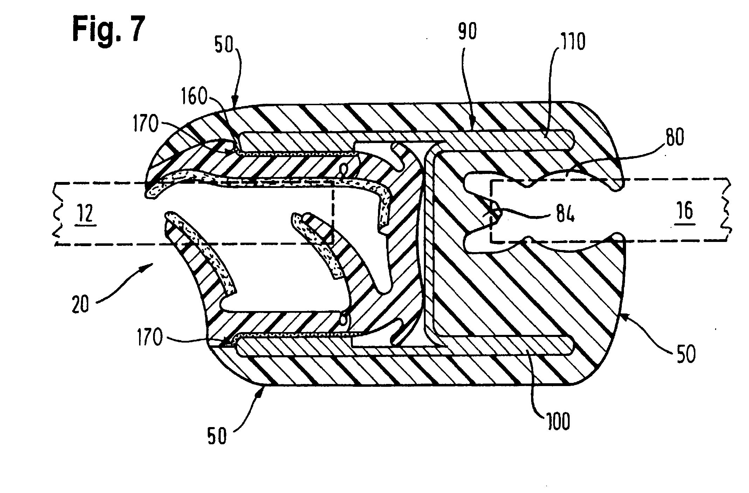

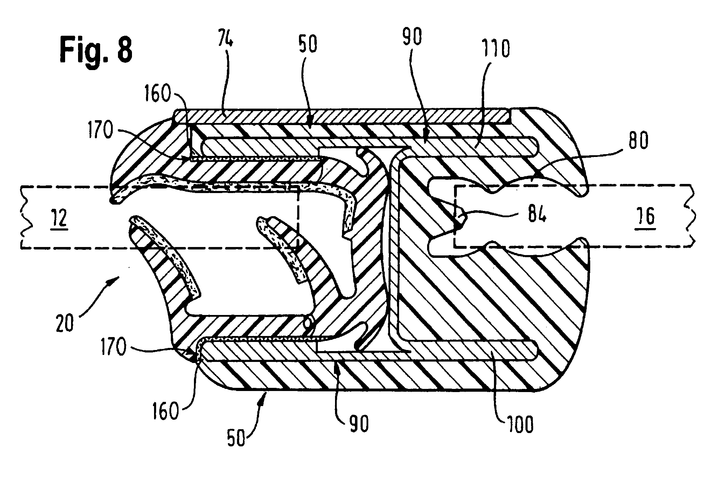

Wie bereits oben erläutert, liegt der Unterschied der verschiedenen Ausgestaltungsformen der Dichtungsanordnungen 10 in den Figuren 2 und 5 bis 8 im Wesentlichen in der Form des zweiten Dichtungselementes 50 und dessen eventuelle Anbindung an das erste Dichtungselement 20. So ist in Fig. 5 die stoffschlüssige Anbindung von zweiten Dichtungselement 50 an das erste Dichtungselement 20 im Bereich der Dichtlippen 32, 34 andersartig geformt. Die Dichtlippen 32, 34 weisen an ihrer Aussenseite Rillen zum Eingriff mit den entsprechend geformten Vorsprüngen 134, 144 der Werkzeugteile 130, 140 auf. Fig. 6 zeigt hierzu eine weitere alternative Anbindung. In Fig. 7 sind die Dichtlippen 32, 34 weitgehend mit der Spritzgießmasse überspritzt. So lässt sich eine verbesserte Befestigung der Dichtungselemente 20, 50 untereinander sowie an dem Träger 90 erreichen. In Fig. 8 weist das zweite Dichtungselement eine aufgeklebte Blende 74 auf.

Das beschriebene Verfahren zur Herstellung der Dichtungsanordnung 10 zeichnet sich insbesondere dadurch aus, dass die beiden Dichtungselemente 20, 50 auf einfache Weise mit dem Träger 90 verbunden werden können, so dass eine komplexe Dichtungsanordnung 10 zur Halterung und Abdichtung sowohl der beweglichen Fensterscheibe 12 als auch der feststehenden Fensterscheibe 16 in einem wenige Arbeitsschritte umfassenden Verfahren erzeugt werden kann. Da nur ein Arbeitsgang erforderlich ist, wird eine Reduzierung des Zeit- und Personalaufwands erreicht. In Folge des Spritzgießprozesses wird eine geeignete und dauerhafte Befestigung des zweiten Dichtungselements 50 an dem Träger 90 geschaffen, wobei es durch das Abführen der in dem Hohlraum während des Spritzgießprozesses verdrängten Luft nicht zu einer Blasenbildung an dem Träger 90 kommt und somit eine verbesserte und dauerhafte Befestigung des zweiten Dichtungselements 50 an dem Träger 90 erreicht werden kann. Ferner entfällt das nachträgliche Zusammenbauen von Träger 90 und den Dichtungselementen 20, 50 erst bei der Endmontage. So kann die Dichtungsanordnung 10 bereits fertig hergestellt geliefert und auf einfache Weise an der Kraftfahrzeugtür montiert werden.

### Bezugszeichenliste

- 10: Dichtungsanordnung
- 12: erste Fensterscheibe
- 13: Innenfläche
- 14: Außenfläche
- 15: Stirnfläche
- 16: zweite Fensterscheibe
- 17: Innenfläche
- 18: Außenfläche
- 19: Stirnfläche

- 20: erstes Dichtungselement
- 22: Außenoberfläche

- 30: Dichtungsabschnitt
- 32: Dichtlippe
- 34: Dichtlippe
- 36: Dichtlippe
- 37: Beflockung
- 38: Nut
- 39: Nut

- 40: Befestigungsabschnitt
- 42: Basis
- 44: Rastschenkel
- 46: Rastschenkel

- 50: zweites Dichtungselement
- 52: Umrissfläche
- 54: Außenfläche

- 56: Innenfläche

- 60: Dichtungsabschnitt

- 70: erster Befestigungsabschnitt
- 72: zweiter Befestigungsabschnitt
- 74: Blende

- 80: Kanal
- 82: Grund
- 84: Erhebung

- 90: Träger
- 92: Steg
- 94: erste Seitenfläche
- 96: zweite Seitenfläche

- 100: Flansch
- 102: Aussenseite
- 104: Innenseite
- 106: Stirnfläche
- 108: Ausnehmung

- 110: Flansch
- 112: Aussenseite
- 114: Innenseite
- 116: Stirnfläche
- 118: Ausnehmung

- 120: Spritzgießwerkzeug

- 130: Werkzeugteil
- 132: Innenfläche
- 134: Vorsprung

- 140: Werkzeugteil
- 142: Innenfläche
- 144: Vorsprung

- 150: Formkern
- 152: Außenfläche

- 160: Luftablass
- 162: Zwischenraum

- 170: luftdurchlässige Schicht

- L: Längsrichtung

## Patentansprüche

1. Verfahren zur Herstellung einer Dichtungsanordnung (10), insbesondere für ein Kraftfahrzeug, die ein erstes Dichtungselement (20), ein zweites Dichtungselement (50) und einen Träger (90) aufweist, wobei das Verfahren folgende Schritte umfasst:
a. Positionieren des ersten Dichtungselements (20) und des Trägers (90) in einem Hohlraum eines Spritzgießwerkzeuges (120);
b. Einbringen einer Spritzgießmasse in den Hohlraum derart, dass das zweite Dichtungselement (50) geformt und mit dem Träger (90) stoffschlüssig verbunden wird,
wobei die in dem Hohlraum durch das Einbringen der Spritzgießmasse verdrängte Luft über einen durch eine luftdurchlässige Schicht (170), die zwischen dem ersten Dichtungselement (20) und dem Träger (90) angeordnet ist, gebildeten Luftablass (160) in einen zwischen dem ersten Dichtungselement (20) und dem Träger (90) gebildeten Zwischenraum (162) abgeführt wird;
c. Vulkanisieren der Spritzgießmasse und
d. Entnehmen der Dichtungsanordnung (10) aus dem Spritzgießwerkzeug (120).

2. Verfahren nach Anspruch 1, **dadurch gekennzeichnet, dass** die Luft wenigstens teilweise von dem Zwischenraum (162) aus dem Spritzgießwerkzeug (120) abgeführt wird.

3. Verfahren nach Anspruch 1 oder 2, **dadurch gekennzeichnet, dass** ein die Form des zweiten Dichtungselements (50) bestimmender Formkern (150) in dem Hohlraum angeordnet wird.

4. Verfahren nach Anspruch 3, **dadurch gekennzeichnet, dass** der Formkern (150) wenigstens abschnittsweise an dem Träger (90) anliegend angeordnet wird.

5. Verfahren nach einem der Ansprüche 1 bis 4, **dadurch gekennzeichnet, dass** eine Halteeinheit (12) zur Halterung des Trägers (90) und/oder des Dichtungselements (20) in dem Hohlraum positioniert wird.

6. Dichtungsanordnung, insbesondere für ein Kraftfahrzeug, die nach dem Verfahren nach einem der Ansprüche 1 bis 5 hergestellt ist und umfasst:
ein erstes Dichtungselement (20),
ein zweites Dichtungselement (50) und
einen Träger (90),
wobei das erste Dichtungselement (20) formschlüssig an dem Träger (90) festgelegt ist,
wobei das zweite Dichtungselement (50) durch Spritzgießen stoffschlüssig mit dem Träger (90) verbunden ist, und
wobei das erste Dichtungselement (20) mit einer luftdurchlässigen Schicht (170) zum Abführen der Luft versehen ist.

7. Dichtungsanordnung nach Anspruch 6, **dadurch gekennzeichnet, dass** das erste Dichtungselement (20) einen Dichtungsabschnitt (30) und einen Befestigungsabschnitt (40) aufweist.

8. Dichtungsanordnung nach Anspruch 6 oder 7, **dadurch gekennzeichnet, dass** die luftdurchlässige Schicht (170) an dem Träger (90) anliegt.

9. Dichtungsanordnung nach Anspruch 8, **dadurch gekennzeichnet, dass** die luftdurchlässige Schicht (170) an einer Außenoberfläche (22) des ersten Dichtungselementes (20) mündet.

10. Dichtungsanordnung nach Anspruch 8 oder 9, **dadurch gekennzeichnet, dass** die luftdurchlässige Schicht (170) durch eine vorbestimmte Kontur der Außenoberfläche (22) des ersten Dichtungselementes gebildet ist, vorzugweise durch eine Riffelung.

11. Dichtungsanordnung nach Anspruch 8 oder 9, **dadurch gekennzeichnet, dass** die luftdurchlässige Schicht (170) aus einer Beflockung, Papier, Karton oder einem Vlies besteht.

12. Dichtungsanordnung nach einem der Ansprüche 6 bis 11, **dadurch gekennzeichnet, dass** der Träger (90) eine Außenseite (102, 112) und eine Innenseite (104, 114) umfasst, wobei das erste Dichtungselement (20) an der Außenseite (102, 112) und das zweite Dichtungselement (50) an der Innenseite (104, 114) angebracht ist.

13. Dichtungsanordnung nach Anspruch 12, **dadurch gekennzeichnet, dass** der Träger (90) eine Ausnehmung (108, 118) zum formschlüssigen Hintergreifen eines Vorsprunges (44, 46) des zweiten Dichtungselementes (50) (50) umfasst.

14. Dichtungsanordnung nach einem der Ansprüche 6 bis 13, **dadurch gekennzeichnet, dass** sich der Träger (90) entlang einer Längsrichtung (L) erstreckt und das erste Dichtungselement (20) einen sich in Längsrichtung (L) veränderlichen Querschnitt aufweist.

15. Dichtungsanordnung nach einem der Ansprüche 6 bis 14, **dadurch gekennzeichnet, dass** der Träger (90) im Querschnitt H-, L- oder U-förmig ausgebildet ist.

## Claims

1. Method for the production of a sealing assembly (10), in particular for a motor vehicle, having a first sealing element (20) a second sealing element (50) and a support (90), wherein the method comprises the following steps:
a. positioning the first sealing element (20) and the support (90) in the cavity of an injection moulding tool (120);
b. introducing of an infection moulding compound into the cavity in such a way that the second sealing element (50) is formed and is positively bonded to the support (90),
wherein the air which is pressed into the cavity as the moulding compound is introduced into the moulding tool is removed via an air outlet (160) formed by an air permeable layer (170) located between the first sealing element (20) and the support (90) into an intermediate space (162) between the first sealing element (20) and the support (90);
c. vulcanising of the moulding compound and
d. removing of the sealing assembly (10) from the injection moulding tool (120).

2. Method according to claim 1, **characterised in that** the air is removed at least in part from the intermediate space (162) out of the injection moulding tool (120).

3. Method according to claim 1 or 2, **characterised in that** a moulding core (150) which determines the shape of the second sealing element (50) is arranged in the cavity.

4. Method according to claim 3, **characterised in that** the moulding core (150) is arranged to abut against the support (90) at least in sections.

5. Method according to one of the claims 1 to 4 **characterised in that** a fixation unit (12) is positioned in the cavity for holding the support (90) and/or the sealing element (20) in place.

6. A sealing element, in particular for a motor vehicle, which is produced using the method according to one of the claims 1 to 5, and comprises:
a first sealing element (20),
a second sealing element (50) and
a support (90),
wherein the first sealing element (20) is fitted positively to the support (90),
wherein the second sealing element (50) is positively bonded to the support (90) by injection moulding and
wherein the first sealing element (20) is provided with an air-permeable layer (170) for removing the air.

7. A sealing element according to claim 6, **characterised in that** the first sealing element (20) has a sealing section (30) and a fastening section (40).

8. A sealing element according to claim 6 or 7, **characterised in that** the air-permeable layer (170) abuts against the support (90).

9. A sealing element according to claim 8, **characterised in that** the air-permeable layer (170) issues onto an outer surface (22) of the first sealing element (20).

10. A sealing element according to claim 8 or 9, **characterised in that** the air-permeable layer (170) is formed by a predetermined contouring of the outer surface (22) of the first sealing element (20), preferably by fluting.

11. A sealing element according to claim 8 or 9, **characterised in that** the air-permeable layer (170) consists of flocking, paper, cardboard or a felt.

12. A sealing element according to one of the claims 6 to 11, **characterised in that** the support (90) has an outer side (102,112) and an inner side (104, 114) wherein the first sealing element (20) is arranged on the outer side (102, 112) and the second sealing element (50) on the inner side (104, 114).

13. sealing element according to claim 12, **characterised in that** the support (90) is provided with a recess (108, 118) into which a projection (44, 46) of the second sealing element (50) engages positively.

14. A sealing element according to one of the claims 6 to 13, **characterised in that** the support (90) extends in a longitudinal direction (L) and that the first sealing element (20) has a cross-section which changes along its length (L).

15. A sealing element according to one of the claims 6 to 14 **characterised in that** the support (90) has an H-, L- or U-shaped cross-section.

## Revendications

1. Procédé pour la fabrication d'un agencement d'étanchéité (10), en particulier pour un véhicule automobile, qui comprend un premier élément d'étanchéité (20), un second élément d'étanchéité (50) et un support (90), le procédé comprenant les étapes suivantes :
a) positionnement du premier élément d'étanchéité (20) et du support (90) dans une cavité d'un outil de moulage par injection (120) ;
b) introduction d'une masse de moulage par injection dans la cavité de telle façon que le second élément d'étanchéité (50) est mis en forme et est relié par coopération de matières avec le support (90),
l'air chassé de la cavité par l'introduction de la masse de moulage par injection étant évacué via une sortie d'air (160), formée par une couche perméable à l'air (170), laquelle est agencée entre le premier élément d'étanchéité (20) et le support (90), jusque dans un espace intermédiaire (162) formé entre le premier élément d'étanchéité (20) et le support (90) ;
c) vulcanisation de la masse de moulage par injection, et
d) enlèvement de l'agencement d'étanchéité (10) hors de l'outillage de moulage par injection (120).

2. Procédé selon la revendication 1, **caractérisé en ce que** l'air est évacué hors de l'outillage de moulage par injection (120) au moins partiellement depuis l'espace intermédiaire (162).

3. Procédé selon la revendication 1 ou 2, **caractérisé en ce qu'**un noyau de moulage (150) qui détermine la forme du second élément d'étanchéité (50) est agencé dans la cavité.

4. Procédé selon la revendication 3, **caractérisé en ce que** le noyau de moulage (150) est agencé de manière à s'appliquer au moins par tronçon contre le support (90).

5. Procédé selon l'une des revendications 1 à 4, **caractérisé en ce qu'**une unité de maintien (12) pour le maintien du support (90) et/ou de l'élément d'étanchéité (20) est positionnée dans la cavité.

6. Agencement d'étanchéité, en particulier pour un véhicule automobile, qui est fabriqué selon le procédé de l'une des revendications 1 à 5 et comprend :
un premier élément d'étanchéité (20),
un second élément d'étanchéité (50) et
un support (90),
le premier élément d'étanchéité (20) étant immobilisé par coopération de formes sur le support (90),
le second élément d'étanchéité (50) étant relié par coopération de matières avec le support (90) par moulage par injection, et
le premier élément d'étanchéité (20) étant pourvu d'une couche perméable à l'air (170) pour l'évacuation de l'air.

7. Agencement d'étanchéité selon la revendication 6, **caractérisé en ce que** le premier élément d'étanchéité (20) comprend un tronçon d'étanchement (30) et un tronçon de fixation (40).

8. Agencement d'étanchéité selon la revendication 6 ou 7, **caractérisé en ce que** la couche perméable à l'air (170) est appliquée contre le support (90).

9. Agencement d'étanchéité selon la revendication 8, **caractérisé en ce que** la couche perméable à l'air (170) débouche à une surface extérieure (22) du premier élément d'étanchéité (20).

10. Agencement d'étanchéité selon la revendication 8 ou 9, **caractérisé en ce que** la couche perméable à l'air (170) est formée par un contour prédéterminé de la surface extérieure (22) du premier élément d'étanchéité, de préférence par des striures.

11. Agencement d'étanchéité selon la revendication 8 ou 9, **caractérisé en ce que** la couche perméable à l'air (170) est constituée par un flocage, du papier, du carton ou un non-tissé.

12. Agencement d'étanchéité selon l'une des revendications 6 à 11, **caractérisé en ce que** le support (90) comprend une face extérieure (102, 112) et une face intérieure (104, 114), le premier élément d'étanchéité (20) étant monté sur la face extérieure (102, 112) et le second élément d'étanchéité (50) étant monté sur la face intérieure (104, 114).

13. Agencement d'étanchéité selon la revendication 12, **caractérisé en ce que** le support (90) comprend un évidement (108, 118) destiné à l'engagement par coopération de formes d'une saillie (44, 46) du second élément d'étanchéité (50) depuis l'arrière.

14. Agencement d'étanchéité selon l'une des revendications 6 à 13, **caractérisé en ce que** le support (90) s'étend le long d'une direction longitudinale (L) et le premier élément d'étanchéité (20) présente une section transversale variable en direction longitudinale (L).

15. Agencement d'étanchéité selon l'une des revendications 6 à 14, **caractérisé en ce que** le support (90) est réalisé avec une section transversale en forme de H, L ou U.
